Europäisches Patentamt

European Patent Office

Office européen des brevets

(19)

(11) **EP 1 095 362 B1**

(12) **FASCICULE DE BREVET EUROPEEN**

(45) Date de publication et mention
de la délivrance du brevet:
**25.09.2002 Bulletin 2002/39**

(21) Numéro de dépôt: **99929380.6**

(22) Date de dépôt: **02.07.1999**

(51) Int Cl.⁷: **G08G 5/04**, G01S 5/00,
G05D 1/00

(86) Numéro de dépôt international:
**PCT/FR99/01594**

(87) Numéro de publication internationale:
**WO 00/002176 (13.01.2000 Gazette 2000/02)**

(54) **DISPOSITIF DESTINE A AMELIORER LA SECURITE DES AERONEFS EN REGIME DE VOL A VUE**

VORRICHTUNG BESTIMMT ZUR VERBESSERUNG DER SICHERHEIT VON FLUGZEUGEN WÄHREND DES SICHTFLUGES

DEVICE FOR IMPROVING THE SECURITY OF AIRCRAFT IN VISUAL FLIGHT REGIME

(84) Etats contractants désignés:
**AT BE CH CY DE DK ES FI FR GB GR IE IT LI LU MC NL PT SE**

(30) Priorité: **06.07.1998 FR 9808606**

(43) Date de publication de la demande:
**02.05.2001 Bulletin 2001/18**

(73) Titulaire: **OFFICE NATIONAL D'ETUDES ET DE RECHERCHES AEROSPATIALES (ONERA)**
**92320 Chatillon sous Bagneux (FR)**

(72) Inventeurs:
• **LE TALLEC, Claude**
**F-92320 Châtillon (FR)**
• **GRAVIER, Boris**
**F-75005 Paris (FR)**

(74) Mandataire: **Loisel, Bertrand**
**Cabinet Plasseraud,**
**84, rue d'Amsterdam**
**75440 Paris Cédex 09 (FR)**

(56) Documents cités:
WO-A-96/05562          FR-A- 2 314 549
FR-A- 2 706 660          FR-A- 2 716 028
US-A- 4 835 537          US-A- 5 636 123

• **"COOPERATIVE COLLISION AVOIDANCE SYSTEM" IBM TECHNICAL DISCLOSURE BULLETIN, vol. 38, no. 2, 1 février 1995 (1995-02-01), page 1/2 XP000502373**

**Description**

La présente invention concerne un dispositif visant à prévenir les risques de collision entre aéronefs évoluant en régime de vol à vue, ou VFR (Visual Flight Rules).

La présente invention est adaptée aux règles de pilotage utilisées par les pilotes VFR, dont le principe de base est : voir et être vu. En effet, la raison la plus largement évoquée dans les rapports d'accidents de type collision est l'incapacité du pilote de voir à temps l'autre appareil. Il est donc souhaitable d'améliorer la sécurité de tous les aéronefs en régime VFR sans risquer de modifier les règles, coutumes et habitudes des pilotes volant en VFR.

Pour cela, il importe de tenir compte des contraintes aéronautiques spécifiques à l'aviation légère VFR. En particulier, les contraintes les plus pénalisantes sont liées aux planeurs pour lesquels :

- l'énergie disponible est limitée à l'emploi d'une batterie supplémentaire de 12 V / 6 A.h ;
- la place disponible est de l'ordre de quelques décimètres cubes ;
- la masse maximale par centimètre carré ainsi que la masse totale sont limitées pour rester dans les contraintes de certification ;
- l'ajout d'antennes extérieures sur le fuselage est rédhibitoire, ainsi que toute modification de l'aérodynamique de la machine.

Un système satisfaisant ces contraintes sera généralement adapté à toutes les autres catégories d'aéronefs volant en VFR, en particulier les avions légers, hélicoptères, ULM...

Actuellement, il existe de nombreux dispositifs anticollision, coopératifs ou autonomes, appliqués à l'aéronautique.

On peut citer deux catégories connues de dispositifs autonomes :

1) Les dispositifs passifs, généralement optiques du type capteur infrarouge, sont performants pour des applications militaires, dans lesquelles les cibles ont des signatures infrarouges adaptées.
2) Les dispositifs actifs, du type radar aéroporté, nécessitent l'émission et la réception d'une onde radar. La largeur de bande du signal fixe les performances de résolution en distance. D'autres critères, comme la longueur d'onde, conditionnent la taille des antennes d'émission et de réception.

On peut citer cinq catégories parmi les dispositifs coopératifs :

1) Certains dispositifs cherchent à augmenter la visibilité des aéronefs (feux anticollision, bandes de couleurs peintes ou collées sur les planeurs, ...). Ces dispositifs sont généralement dépendants du type d'aéronef sur lequel ils sont installés. Ils ne permettent pas d'augmenter de façon significative la capacité du pilote à regarder à temps au bon endroit.
2) D'autres dispositifs visent à détecter de façon optique les flashes des feux anticollision des avions. Toutefois, ces feux ne sont pas disponibles sur tous les aéronefs VFR. D'autre part, la portée de ces dispositifs est réduite (de l'ordre de 1 km), ce qui paraît insuffisant compte tenu des vitesses typiques des avions légers et des temps de réaction moyens.
3) Les systèmes de type "TCAS" (Traffic alert and Collision Avoidance Systems) nécessitent une importante source d'énergie, et l'installation de deux ensembles d'antennes d'émission et de réception respectivement sur les parties supérieure et inférieure de l'aéronef. Ils fonctionnent comme un véritable radar secondaire embarqué. Ils ne peuvent détecter que les aéronefs équipés de transpondeurs en fonctionnement, ce qui souvent n'est pas le cas des aéronefs VFR. Certains de ces systèmes utilisent des algorithmes de trajectographie pour proposer aux pilotes des manoeuvres d'évitement. En particulier, le TCAS II est devenu obligatoire aux USA pour tous les appareils de plus de trente sièges depuis 1993.
4) Des variantes aux TCAS nécessitent l'appui de radars secondaires du contrôle aérien pour écouter les transpondeurs des aéronefs voisins lorsqu'ils sont interrogés. Cet appui par des radars secondaires n'est pas disponible dans le monde entier, et rend le système tributaire d'installations au sol.
5) Des dispositifs radioélectriques du type balise peuvent comprendre un moyen de détermination de position, un émetteur et un récepteur de données, un organe de calcul de conflits potentiels, et un dispositif de visualisation destiné au pilote. Un exemple d'un tel dispositif est décrit dans US-A-4 835 537. Comme le TCAS, ces dispositifs paraissent mal adaptés aux conditions de vol VFR, en ce qu'ils utilisent des écrans de visualisation sur lesquels sont présentées des informations relativement complexes dont certaines se rapportent à des aéronefs qui ne représentent pratiquement aucun risque de collision. L'attention du pilote est en partie captée par l'instrument, ce qui est en contradiction avec le principe même des règles du vol à vue.

**EP 1 095 362 B1**

WO 96/05562 décrit un système automatique d'évitement de collision dans lequel des aéronefs échangent par radio leurs coordonnées calculées à partir de signaux GPS. Un calculateur de bord extrapole les trajectoires des aéronefs avoisinants pour évaluer les risques de collision, créer des manoeuvres d'évitement et établir des liaisons entre les aéronefs pour coordonner ces manoeuvres.

Il n'existe donc pas aujourd'hui de dispositif de prévention des collisions spécialement adapté pour couvrir les spécificités liées à la sécurité de tous les types d'aéronefs volant en VFR. En particulier, aucun dispositif ne permet la prise en compte de trajectoires complexes, telles que celles de planeurs évoluant dans des spirales ascendantes, qui occasionnent un nombre appréciable d'accidents.

L'invention vise à proposer des dispositifs anticollision de type coopératif qui soient particulièrement bien adaptés aux conditions VFR.

L'invention propose ainsi un dispositif d'assistance au pilotage en vol à vue, à installer à bord d'un aéronef, comprenant :

- des moyens de mesure pour estimer au moins la position et le vecteur vitesse instantanés de l'aéronef ;
- un émetteur/récepteur radio pour diffuser des messages de coopération contenant des paramètres représentant au moins la position et le vecteur vitesse instantanés estimés de l'aéronef, et pour recevoir des messages de coopération analogues diffusés depuis d'autres aéronefs ;
- des moyens d'analyse des messages de coopération reçus par l'émetteur/récepteur radio et des données issues des moyens de mesure, pour identifier des risques éventuels de collision avec d'autres aéronefs ; et
- une interface homme-machine pour signaler au pilote de l'aéronef les risques éventuels de collision identifiés par les moyens d'analyse.

Selon l'invention, les moyens d'analyse sont agencés pour procéder aux opérations suivantes à des instants d'analyse successifs :

- subdiviser une période d'analyse, commençant à l'instant d'analyse courant, en une série d'intervalles de temps consécutifs ;
- pour chacun de ces intervalles de temps, déterminer un volume de protection sur la base de différentes positions futures possibles de l'aéronef déduites des données issues des moyens de mesure ;
- extrapoler la trajectoire de chaque autre aéronef, depuis lequel un message de coopération est reçu, sur la base des paramètres contenus dans ce message de coopération, de manière à estimer des positions possibles de cet autre aéronef au cours des intervalles de temps de la série ; et
- s'il est rempli une condition selon laquelle une position possible estimée d'un autre aéronef au cours d'un des intervalles de temps de la série se trouve dans le volume de protection déterminé pour ledit intervalle de temps, commander l'interface homme-machine afin que soit délivré au pilote un message de signalisation indiquant la direction dans laquelle se trouve ledit autre aéronef à l'instant d'analyse courant.

De type coopératif, le dispositif est commun à tous les aéronefs volant en régime VFR, incluant notamment les planeurs, et fonctionne a priori avec une couverture mondiale sans les contraintes liées à d'éventuels organismes de contrôle ou tributaire d'installations au sol.

Le dispositif peut fonctionner avec une précision permettant de respecter le temps moyen de réaction d'un pilote VFR. Ce temps a été évalué, selon certaines études, à 12,5 secondes entre le moment où le pilote voit l'autre aéronef et le moment où il l'évite, incluant la vision de l'objet (0,1 s), sa reconnaissance (1 s), la certitude de collision (5 s), la décision de tourner (4 s), la réaction musculaire (0,4 s), et le temps moyen de réponse d'un avion léger ou planeur (2 s).

La nature et le fonctionnement du dispositif permettent de ne pas modifier les règles, coutumes et habitudes des pilotes volant en VFR ni de leur imposer une surcharge de travail.

De préférence, le message de signalisation indique en outre le temps restant à écouler jusqu'au premier des intervalles de temps de la période d'analyse pour lequel ladite condition est remplie. Ceci permet au pilote d'apprécier l'urgence de son intervention.

Pour faciliter le repérage visuel de l'autre aéronef, les messages de signalisation incluent avantageusement une indication de taille apparente de l'aéronef tiers, déterminée sur la base d'indications de taille réelle incluses dans les messages de coopération et de la distance entre les deux aéronefs.

De préférence, l'interface homme-machine comprend des moyens pour délivrer les messages de signalisation sous forme de messages vocaux. Dans ce cas, le dispositif ne détourne pas l'attention visuelle du pilote vers l'intérieur du cockpit, au contraire de la plupart des systèmes anticollision destinés à l'aviation légère qui emploient un écran de visualisation pour donner au pilote une représentation graphique du trafic et/ou des aéronefs conflictuels à proximité. La structure du message vocal de signalisation peut répondre à une phraséologie spécifique et comparable aux messages radiotéléphoniques classiques, par exemple : « Trafic, 15 secondes, 11 heures , 10°, taille 2 ». Ainsi, le pilote habitué à recevoir de tels messages d'information saura très rapidement repérer l'appareil présentant un danger potentiel. Il prendra alors les bonnes décisions pour éviter la collision compte tenu de la situation.

La manoeuvre d'évitement optimale, choisie grâce aux informations fournies par le dispositif, sera laissée à l'appréciation du pilote, conformément à la réglementation VFR qu'il doit appliquer. Ainsi, le fondement des règles de vol à vue, qui repose sur une observation de l'espace environnant pendant 90% du temps, est respecté.

La nature du dispositif et l'algorithme utilisé pour traiter les informations disponibles permettent une bonne adaptation aux différentes catégories d'aéronefs envisagées, en tenant compte de leur vitesse, de leur type d'évolution, de leur densité moyenne de répartition, de la place disponible, ainsi que des sources d'énergies utilisables à bord.

Dans un mode de réalisation préféré du dispositif, les moyens dé mesure sont agencés pour estimer le rayon de virage instantané de l'aéronef dans un plan horizontal, dont dépendent les positions futures possibles de l'aéronef sur la base desquelles les moyens d'analyse déterminent les volumes de protection. En adaptant ainsi les volumes de protection pertinents au rayon de virage instantané de l'aéronef, on prend mieux en compte les risques effectifs de collision.

La durée de la période d'analyse est avantageusement choisie comme une fonction croissante du rayon de virage instantané si celui-ci est estimé par les moyens de mesure, par exemple comme le minimum entre une durée de référence (ou délai de préavis maximal) et une durée proportionnelle au rapport entre le rayon de virage instantané estimé par les moyens de mesure et le module de la projection sur le plan horizontal du vecteur vitesse instantané estimé par les moyens de mesure.

Ceci permet de limiter l'information délivrée au pilote qui négocie un virage, pour ne pas distraire son attention, en évitant de signaler des aéronefs trop éloignés pour représenter un risque réel de collision compte tenu de la vitesse et du rayon de virage instantanés. Cet avantage est particulièrement intéressant dans le cas des planeurs qui, lorsqu'ils sont dans une spirale ascendante, ont un rayon de virage serré et sont souvent entourés d'autres planeurs qu'il convient de signaler à bon escient.

Le dispositif est de préférence réglable par le pilote en ce qui concerne le délai de préavis maximal du danger de collision. Ceci lui offre un confort supplémentaire correspondant au temps de réaction qu'il préférera se donner en fonction de ses capacités personnelles, de la quantité moyenne d'information qu'il souhaite se faire délivrer et de la phrase de vol courante (décollage, croisière, approche...).

La nature du dispositif permet une réalisation relativement simple et une fabrication peu coûteuse. Il peut donc être systématiquement installé par les propriétaires des petits aéronefs, contrairement à cerrains autres dispositifs relativement onéreux. La large diffusion de ce dispositif, condition pour qu'une plus grande sécurité des vols soit assurée, peut donc être satisfaite.

D'autres particularités et avantages de la présente invention apparaîtront dans la description ci-après d'exemples de réalisation non limitatifs, en référence aux dessins annexés, dans lesquels :

- la figure 1 est une illustration d'exemples de messages de signalisation délivrés par un dispositif selon l'invention à des pilotes d'aéronefs en régime VFR ;
- la figure 2 est un schéma d'ensemble d'un dispositif selon l'invention ;
- la figure 3 est un organigramme d'opérations effectuées par un module d'analyse du dispositif de la figure 2 ;
- la figure 4 est une vue en perspective d'un volume élémentaire de protection défini autour de l'aéronef ; et
- les figures 5 à 7 sont des vues schématiques en élévation, de dessus et en perspective d'un volume de protection défini pour un intervalle de temps donné.

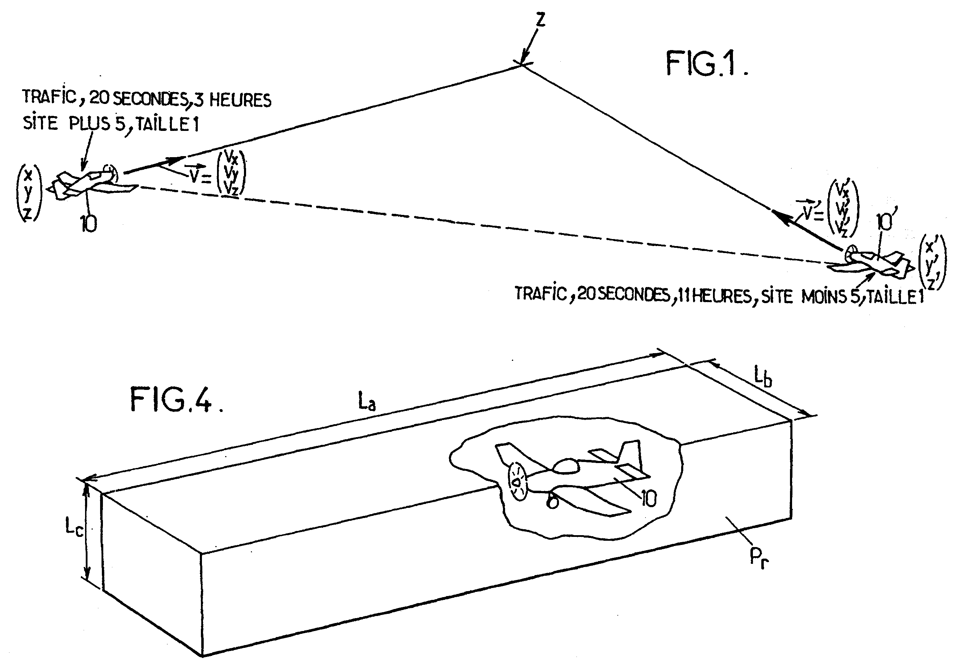

La figure 1 illustre des conditions d'application de la présente invention, en montrant deux aéronefs 10,10' volant à proximité l'un de l'autre en vol à vue. Chacun des aéronefs est équipé d'un dispositif selon l'invention, décrit plus en détail ci-après, qui permet à son pilote de se faire délivrer, sous la forme de messages vocaux, de l'information facilitant le repérage visuel de l'autre aéronef si une collision risque de survenir avec celui-ci dans une certaine zone Z.

Un tel message vocal de signalisation est délivré sous une forme semblable à ce que pourrait prononcer un copilote, afin de faciliter son interprétation par le pilote. Dans l'illustration de la figure 1, cette information se compose de cinq éléments :

- le premier ("Trafic") indique au pilote la nature du message, pour attirer son attention sur le fait qu'il devrait visualiser un autre aéronef ;
- le second ("20 secondes") fournit une estimation du temps restant à écouler jusqu'à l'éventuelle collision dans la zone Z ;
- les troisième et quatrième éléments ("3 heures, site plus 5" pour l'aéronef 10, "11 heures, site moins 5" pour l'aéronef 10') indiquent, dans un repère lié à l'aéronef, la direction générale dans laquelle le pilote devrait regarder pour repérer l'autre aéronef, c'est-à-dire la direction correspondant à la ligne en trait interrompu sur la figure 1.

Cette direction est indiquée à l'aide d'un angle d'azimut $\phi$ exprimé, comme il est usuel, sous forme de l'heure pointée par la petite aiguille d'un cadran d'horloge, et d'un angle de site exprimé en degrés par rapport à la ligne d'horizon ;

- le cinquième élément ("taille 1") est une indication de la taille apparente de l'autre aéronef, pour faciliter son repérage.

Pour l'élaboration de tels messages de signalisation, chaque aéronef 10 est équipé d'un dispositif comprenant :

- des moyens de mesure pour estimer des paramètres instantanés x, y, z, $V_x$, $V_y$, $V_z$, R de la trajectoire de l'aéronef 10 pourvu du dispositif, dans un système de coordonnées commun à tous les aéronefs ;
- un émetteur/récepteur radio pour diffuser des messages de coopération incluant certains des paramètres instantanés estimés pour l'aéronef 10, et pour recevoir des messages de coopération semblables diffusés par d'autres aéronefs 10' situés à portée de l'aéronef 10 ;
- des moyens d'analyse des risques de collision sur la base des paramètres de trajectoire estimés pour l'aéronef 10 et des paramètres de trajectoire obtenus dans les messages de coopération reçus par l'émetteur/récepteur radio ;
- une interface homme-machine pour délivrer les messages de signalisation à partir du résultat de l'analyse des risques de collision.

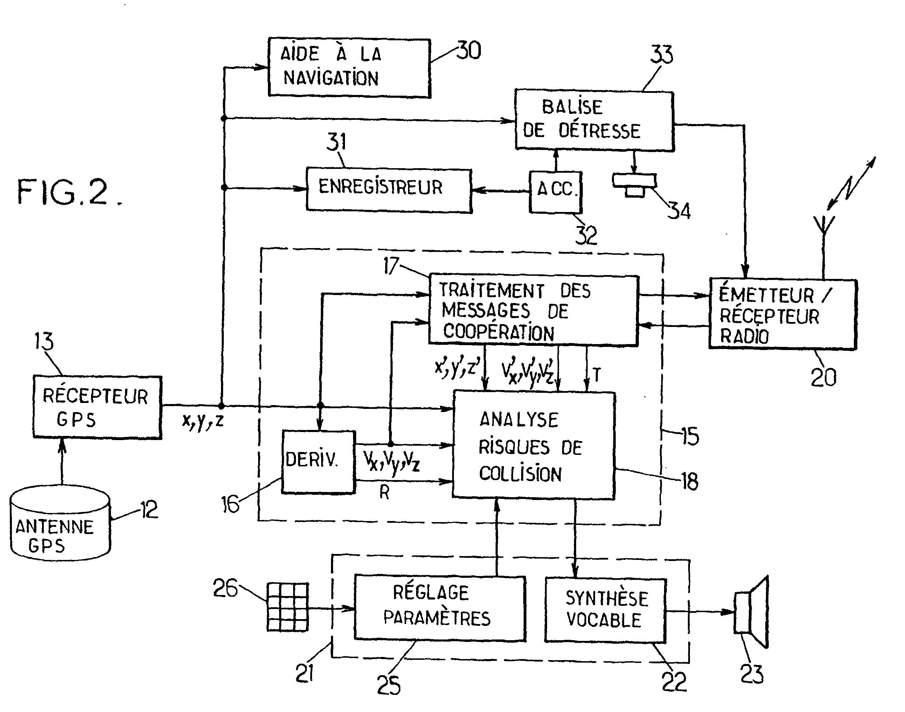

Dans le dispositif représenté sur la figure 2, les moyens de mesure captent des signaux de référence de positionnement issus d'une constellation de satellites, tels que des signaux GPS ("Global Positioning System"). Ils comprennent une antenne GPS 12 et un récepteur associé 13 pour traiter les signaux GPS et en déduire la position instantanée de l'aéronef 10 sous le forme de ses trois coordonnées $x,y,z$ dans un repère indépendant de l'aéronef. A titre d'exemple, la coordonnée $x$ peut correspondre à la longitude, la coordonnée $y$ à la latitude, et la coordonnée $z$ à l'altitude, le plan $xOy$ correspondant au plan horizontal. Pour certains paramètres, les mesures GPS pourraient être complétées par des mesures effectuées par des capteurs embarqués à bord de l'aéronef (par exemple par un altimètre pour le paramètre $z$).

Dans l'architecture représentée sur la figure 2, le dispositif comprend un calculateur 15, tel qu'un microprocesseur associé à une mémoire de travail et à une mémoire de programme. Dans la représentation synoptique de la figure 2, le calculateur 15 comporte trois modules 16,17,18 qui, dans la pratique, peuvent être des modules logiciels, c'est-à-dire des éléments de programme exécutés par le microprocesseur.

Le module 16 dérive les paramètres de position $x,y,z$ fournis par le récepteur GPS 13 pour estimer les coordonnées $V_x,V_y,V_z$ du vecteur vitesse V de l'aéronef 10 dans le même repère, ainsi que le rayon de virage instantané R de l'aéronef 10 dans le plan horizontal $xOy$. Deux mesures GPS successives permettent d'estimer le vecteur vitesse V, et trois mesures successives permettent d'estimer le rayon de virage R.

Le module 17 assure d'une part la mise en forme des message de coopération diffusés par l'émetteur/récepteur radio 20, et d'autre part le décodage des messages de coopération reçus depuis d'autres aéronefs 10'. Chaque message de coopération correspond à un bloc de données, dont la taille est par exemple de 90 bits. Un exemple de répartition des bits dans un tel bloc est donné dans le tableau I.

Tableau I

| Type de donnée | Nombre de bits | Bits de signe | précision | limitation |
|---|---|---|---|---|
| Longitude $x$ | 23 | 1 | $10^{-4}$ ° | ± 180° |
| Latitude $y$ | 22 | 1 | $10^{-4}$ ° | ± 90° |
| Altitude $z$ | 13 | 0 | 4 m | 32767 m |
| Vitesse en $x$ | 8 | 1 | 1 m/s | ± 255 m/s |
| Vitesse en $y$ | 8 | 1 | 1 m/s | ± 255 m/s |
| Vitesse en $z$ | 6 | 1 | 0,5 m/s | ± 31 m/s |
| Taille $T$ de l'aéronef | 2 | 0 | 1 | 4 |
| Somme de contrôle | 3 | | | |
| Total | 90 | | | |

Dans le tableau 1, les six premières lignes correspondent aux position et vitesse instantanées $x,y,z$, $V_x$,$V_y$, $V_z$ de l'aéronef. La taille T de l'aéronef est une indication pouvant prendre quatre valeurs et représentant la taille réelle de l'aéronef (par exemple proportionnelle à son envergure). La somme de contrôle (CRC) se compose de trois bits de redondance permettant au module de traitement 17 de détecter d'éventuelles erreurs de transmission dans un message de coopération reçu.

Compte tenu de la difficulté d'obtenir une bande de fréquence pour un canal de communication, le protocole appliqué par l'émetteur/récepteur radio 20 utilise de préférence un canal fréquentiel commun à partager entre tous les participants.

Le protocole utilisé pour la communication est du type à accès multiple par répartition dans le temps (TDMA, "Time Division Multiple Access"), où chaque aéronef émet sur une fréquence porteuse commune. L'optimisation du canal peut être réalisée par un protocole approprié du type ALOHA, suivant lequel les différents participants émettent à tour de rôle sur des durées déterminées, synchronisées par le temps GPS. Un tel protocole est décrit dans le brevet français 2 708 124 et son homologue américain 5 544 075 incorporé ici par référence.

Le canal fréquentiel est divisé en périodes de temps $T_c$ reproductibles, chaque période comportant un nombre $N_c$ de tranches temporelles équiréparties. L'accès à une tranche temporelle pour l'émission se fait par repérage des tranches temporelles libres au cours d'une période d'écoute d'au moins $T_c$ secondes, puis par choix aléatoire d'une tranche parmi les tranches repérées comme étant libres. Ce procédé comporte une procédure d'accès au canal (écoute puis choix d'une plage libre), une période d'occupation de la plage choisie, et une procédure de libération de la plage.

Pour optimiser le temps de transmission, il est utile d'adapter les périodes de temps $T_c$, le nombre de tranches $N_c$ et le format des données à la présente application. L'adaptation du protocole aux données à transmettre peut être la suivante : une période $T_c$=1 seconde est choisie afin de permettre aux informations de positionnement déduites des signaux GPS d'être suffisamment renouvelées ; le nombre de tranches temporelles est $N_c$=100 ce qui, pour la période $T_c$=1 seconde, laisse une durée de 0,01 seconde pour la transmission des données utiles. Ce nombre $N_c$ est ainsi judicieusement choisi pour être supérieur aux nombres d'aéronefs VFR que l'on peut rencontrer dans la zone de couverture radio de l'émetteur/récepteur 20 dans des cas extrêmes, par exemple lors des compétitions de planeurs.

De préférence, pour une vitesse de transmission de 9600 bauds (valeur typique des modems courants du commerce qui, en VHF, respectent la bande passante autorisée de $\pm$12,5 kHz), la taille maximum d'un bloc de données sera donc de 96 bits par aéronef.

Avec cette vitesse de transmission de 9600 bauds, si l'occupation du canal est optimisée, en attribuant une tranche de 0,01 seconde à chaque aéronef, le bloc de 90 bits du tableau I peut être transmis en 9,375 ms, ce qui laisse un intervalle libre de 625 µs entre messages consécutifs pour permettre aux émetteurs/récepteurs 20 de passer de l'émission à la réception, ainsi que pour pouvoir insérer, selon le procédé du brevet français 2 708 124, des plages d'écoute dans les plages occupées.

L'émetteur/récepteur radio 20 capte les messages de coopération diffusés par les aéronefs 10' situés à portée radio de l'aéronef 10 (typiquement quelques kilomètres), et extrait les informations de position $x',y',z'$ de ces aéronefs 10', leurs informations de vitesse $v'_x$,$v'_y$,$v'_z$ et leurs indications de taille réelle T.

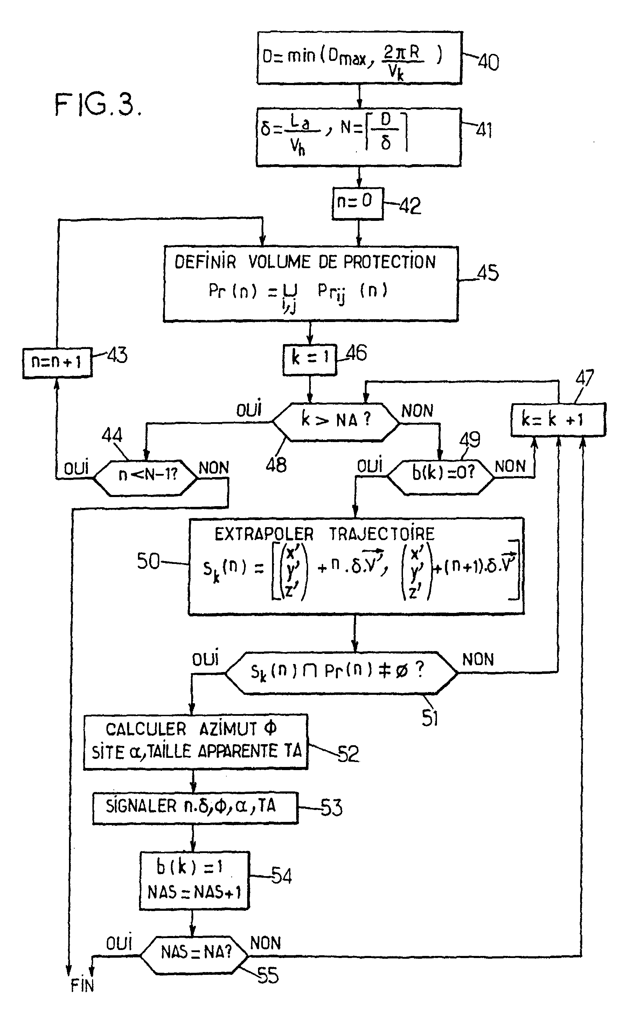

Ces informations, ainsi que celles issues du récepteur GPS 13 et du module de dérivation 16 sont traitées par le module d'analyse 18 pour évaluer les risques de collision. Cette analyse peut être conforme à la procédure représentée sur la figure 3, qui est exécutée à des instants d'analyse successifs $t_p$ séparés par une période $T_c$ ($t_{p+1}$=$t_p$+$T_c$) si le nombre NA de messages de coopération reçus depuis d'autres aéronefs 10' sur la dernière période $T_c$ est plus grand que 0.

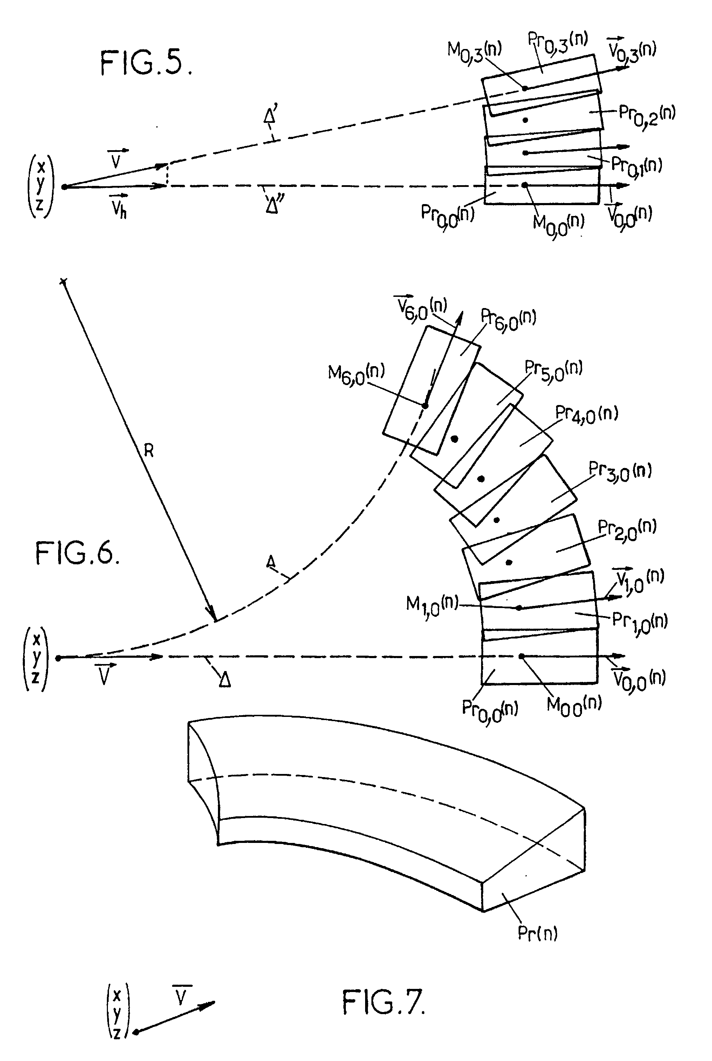

Pour chaque aéronef 10, il est défini un volume de protection élémentaire fixe par rapport à l'aéronef. Ce volume doit avoir des dimensions compatibles avec la précision de positionnement du GPS, à savoir quelques dizaines de mètres. Comme illustré sur la figure 4, ce volume de protection élémentaire Pr peut être en forme de parallélépipède rectangle, de longueur $L_a$ suivant la direction longitudinale de l'aéronef 10, de largeur $L_b$ suivant l'envergure de l'aéronef 10, et de hauteur $L_c$. A titre d'exemple, on peut prendre $L_a$=200 m (protection préférentielle dans le sens du déplacement), $L_b$=100 m (choisie par rapport à la précision relative du GPS), et $L_c$=50 m (la vitesse de rapprochement est a priori inférieure dans le sens vertical).

A partir de chaque instant d'analyse $t_p$, le module 18 définit une période d'analyse de durée D. Avantageusement, cette durée D est une fonction du rayon de virage instantané R et de la vitesse $V_h$ de l'aéronef 10 dans le plan horizontal $x$O$y$, c'est-à-dire $v_h = \sqrt{v_x^2 + v_y^2}$.

Dans l'exemple représenté sur la figure 3 (étape 40), la durée D de la période d'analyse est une fonction croissante du rayon de virage instantané R fourni par le module de dérivation 16, à savoir le minimum entre une durée de référence $D_{max}$ (ou délai de préavis maximal) et une durée égale à $\frac{2\pi R}{V_h}$. Cette dernière durée $\frac{2\pi R}{V_h}$ est égale au temps nécessaire pour que l'aéronef 10 effectue un tour complet sur lui-même, vu dans le plan horizontal, s'il maintient sa vitesse et son rayon de virage instantanés. Le fait de limiter la durée D à ce temps (ou à un temps proportionnel à celui-ci) permet d'adapter la quantité d'information qui sera délivrée au pilote aux trajectoires instantanées typiques de tous les aéronefs volants en VFR (y compris les planeurs en spirale ascendante).

**EP 1 095 362 B1**

A l'étape 41 de la procédure d'analyse, le module 18 subdivise la période d'analyse [$t_p$, $t_p$+D] en une série de N intervalles de temps consécutifs. Chacun de ces intervalles de temps a une durée $\delta=\frac{L_a}{V_h}$, le nombre N étant l'entier égal ou immédiatement supérieur au rapport $\frac{D}{\delta}$.

Ensuite, pour chacun des intervalles de temps n=0 à n=N-1, le module 18 détermine un volume de protection Pr(n) sur la base de différentes positions futures possibles de l'aéronef 10 déduites des paramètres de trajectoire $x,y,z,V_x,V_y,V_z,R$, et examine si d'autres aéronefs sont susceptibles de pénétrer dans ce volume dans l'intervalle de temps considéré. Dans l'exemple représenté sur la figure 3, ces opérations sont effectuées dans une boucle indexée par l'entier n (initialisé par n=0 à l'étape 42, et incrémenté d'une unité à l'étape 43 après l'exécution de ces opérations si n<N-1 au test 44).

Le volume de protection Pr(n) est défini à l'étape 45 à partir du volume élémentaire *Pr* de la figure 4. La construction de ce volume de protection Pr(n) est par exemple conforme à la procédure ci-après, illustrée par les figures 5 à 7.

Vues en projection sur un plan horizontal (figure 6), les positions futures possibles $M_{i,j}(n)$ de l'aéronef 10 prises en compte pour déterminer le volume de protection Pr(n) sont comprises entre d'une part la demi-droite $\Delta$ définie par la position $x,y,z$ et le vecteur vitesse $\vec{V}$ déterminé à partir des dernières mesures GPS et d'autre part le côté convexe de l'arc de cercle A défini par la position $x,y,z$, le vecteur vitesse $\vec{V}$ et le rayon de virage instantané R fourni par le module 16. En projection dans ce plan horizontal, on prend en compte un nombre 1+I(n) de positions possibles $M_{i,0}(n)$ pour l'intervalle de temps n, respectivement associées à des vecteurs vitesse $\vec{V}_{i,0}(n)$. Le nombre I(n) dépend des valeurs relatives de $n.\delta$, R, $V_h$, $L_a$, et $L_b$. La position $M_{i,0}(n)$ et le vecteur vitesse $\vec{V}_{i,0}(n)$ sont calculés, pour $0 \leq i \leq I(n)$, comme étant ceux qu'aurait l'aéronef 10 à l'instant $t_p+n.\delta$ s'il maintenait sa vitesse horizontale $V_h=\|\vec{V}_{i,0}(n)\|$ sur une trajectoire de rayon de courbure constant égal à $\frac{R.I(n)}{i}$.

Vues en projection sur un plan vertical, les positions $M_{i,j}(n)$ possibles de l'aéronef pour l'intervalle de temps n sont comprises entre d'une part la demi-droite $\Delta'$ définie par la position $x,y,z$ et le vecteur vitesse instantanée $\vec{V}$ déduits des mesures GPS et d'autre part la demi-droite $\Delta''$ définie par la position $x,y,z$ et par la direction horizontale (figure 5). Chacun des J(n) points $M_{i,j}(n)$, pour $1 \leq j \leq J(n)$ (le nombre J(n) dépend des valeurs relatives de $n.\delta$, $V_z$, $L_a$, et $L_c$), est déduit du point $M_{i,0}(n)$ en faisant l'hypothèse que la composante verticale du vecteur vitesse associé $\vec{V}_{i,j}(n)$ est constante de $t_p$ à $t_p+n.\delta$ et égale à $\frac{V_z.j}{J(n)}$, la composante horizontale de $\vec{V}_{i,j}(n)$ étant $\vec{V}_{i,0}(n)$.

En positionnant le volume de protection élémentaire *Pr* par rapport à la position future possible $M_{i,j}(n)$, et en orientant ce volume élémentaire suivant le vecteur vitesse associé $\vec{V}_{i,j}(n)$, on obtient un volume élémentaire noté $Pr_{i,j}(n)$. Le volume de protection Pr(n) déterminé à l'étape 45 pour l'intervalle de temps n correspond à la réunion de ces volumes élémentaires $Pr_{i,j}(n)$ pour $0 \leq i \leq I(n)$ et $0 \leq j \leq J(n)$. Ce volume Pr(n) a approximativement la forme représentée sur la figure 7.

Après avoir ainsi défini le volume de protection Pr(n) à l'étape 45, le module d'analyse 18 examine si l'un des aéronefs 10' depuis lequel un message de coopération a été reçu est susceptible de pénétrer dans ce volume de protection Pr(n) pendant l'intervalle de temps n. Dans l'exemple représenté, ceci est effectué dans une boucle dont les itérations sont contrôlées par un index k désignant les messages de coopération reçus ou, de façon équivalente, les aéronefs ayant diffusé ces messages (initialisé par k=1 à l'étape 46 et incrémenté d'une unité à l'étape 47 à la fin de l'itération). A chaque message de coopération reçu, correspondant à un aéronef k, on associe un bit b(k) indiquant si cet aéronef a déjà été considéré comme représentant un risque de collision au cours de l'analyse effectuée à partir de l'instant $t_p$. Avant de procéder à cette analyse, tous les bits b(k) sont initialisés à 0. Le nombre NAS, initialisé à 0, désigne le nombre d'aéronefs ayant été considérés comme représentant un risque de collision.

Si l'index k est inférieur ou égal au nombre NA d'aéronefs détectés (test 48), et si l'aéronef k n'a pas déjà été identifié comme représentant un risque de collision (b(k)=0 lors du test 49), le module d'analyse 18 extrapole la trajectoire de l'aéronef k sur l'intervalle de temps n à l'étape 50. Il détermine pour cela le segment $S_k(n)$ que décrira l'aéronef k au cours de l'intervalle de temps n s'il maintient son vecteur vitesse $\vec{V}$, dont les coordonnées sont fournies par le module de traitement 17, ainsi que sa position instantanée $x',y',z'$ également fournie par le module de traitement 17.

Ce segment $S_k(n)$ a pour extrémités les deux points de coordonnées

$$\begin{pmatrix} x' \\ y' \\ z' \end{pmatrix} + n.\delta.\vec{V}'$$

et

7

$$\begin{pmatrix} x' \\ y' \\ z' \end{pmatrix} + (n+1).\delta.\vec{V}'$$

dans le repère cartésien commun aux aéronefs.

A l'étape 51, le risque de collision au cours de l'intervalle de temps n est estimé en examinant si une partie au moins du segment $S_k(n)$ se trouve à l'intérieur du volume de protection Pr(n). Le fait d'avoir défini le volume de protection Pr(n) comme une réunion de volumes de protection élémentaire parallélépipédiques à l'étape 45 facilite grandement la vérification faite à l'étape 51 étant donné qu'il est très facile de déterminer si l'intersection entre un segment et un parallélépipède rectangle est vide ou non.

Si l'étape 51 révèle un risque de collision (intersection non vide), le module 18 calcule, à l'étape 52, l'angle d'azimut $\phi$ et l'angle de site $\alpha$ correspondant à la direction dans laquelle l'aéronef k éventuellement conflictuel est visible depuis l'aéronef 10 à l'instant $t_p$. Ces angles $\phi,\alpha$ sont simplement déterminés par changement de repère à partir des coordonnées $x,y,z$ et $x',y',z'$ des deux aéronefs.

A l'étape 52, le module 18 évalue également la taille apparente TA de l'autre aéronef k à partir du rapport $\frac{T}{Dist}$ entre la taille réelle T de l'aéronef k, obtenue par le module 17 dans le message de coopération correspondant, et la distance Dist$=\sqrt{(x'-x)^2+(y'-y)^2+(z'-z)^2}$ entre les deux aéronefs.

A l'étape 53, le module d'analyse 18 informe l'interface homme-machine 21 du dispositif qu'il convient de produire un message de signalisation indiquant : (i) qu'un temps $n.\delta$ reste à écouler avant l'éventuelle collision ; (ii) les angles d'azimut et de site $\phi,\alpha$ calculés à l'étape 52 ; et (iii) la taille apparente TA calculée à l'étape 52. Le module 18 change la valeur du bit b(k), et augmente d'une unité le nombre NAS à l'étape 54. Si le nombre NAS est égal au nombre d'aéronefs NA, alors tous les aéronefs pour lesquels un message de coopération a été reçu ont déjà fait l'objet d'un message de signalisation, de sorte que l'analyse effectuée à partir de l'instant $t_p$ est terminée.

L'itération k de la boucle se termine par l'incrémentation de l'étape 47 si b(k)=1 à l'étape 49 (aéronef déjà signalé), si $S_k(n) \cap Pr(n)=\varnothing$ à l'étape 51 (collision improbable) ou si NAS<NA à l'étape 55. Quand tous les aéronefs ont été passés en revue pour l'intervalle de temps n (k>NA à l'étape 48), le module d'analyse 18 passe à l'étape 44 pour étudier le prochain intervalle de temps n, ou pour terminer l'analyse débutée à partir de l'instant $t_p$.

L'interface homme-machine (figure 2) comprend un module 22 de synthèse vocale recevant les indications fournies par le module d'analyse 18 à l'étape 53. Ce module 22, de constitution connue en soi, élabore les messages vocaux de signalisation, et commande un haut-parleur ou un écouteur 23 pour que ces messages vocaux soient délivrés au pilote.

L'interface homme-machine 21 comporte en outre un module 25 de réglage de paramètres permettant au pilote, à l'aide d'un organe tel qu'un clavier 26, de choisir la valeur de certains paramètres des algorithmes de trajectographie et/ou d'évaluation des risques de collision exécutés par le calculateur 15.

En particulier, il est intéressant de pouvoir choisir la valeur du délai de préavis maximum $D_{max}$ (utilisé à l'étape 40). Le dispositif d'assistance peut alors délivrer au pilote plus ou moins d'information, en explorant une zone plus ou moins étendue devant l'aéronef, en fonction de l'expérience du pilote ou du temps de réaction moyen qu'il estime avoir ou de la phase de vol courante (décollage, croisière, approche...).

Il est à noter que la procédure d'analyse des risques de collision expliquée ci-dessus en référence aux figures 3 à 7 n'est qu'un exemple d'une telle procédure pouvant être mise en oeuvre dans un dispositif selon l'invention. Diverses variantes seraient possibles à différentes étapes de la procédure.

Par exemple, l'extrapolation de la trajectoire des autres aéronefs à l'étape 50 pourrait consister à déterminer non pas un segment calculé en prolongeant le vecteur de vitesse de l'autre aéronef, mais un volume calculé en tenant compte d'une éventuelle variation du vecteur vitesse de l'autre aéronef dans une certaine plage. Ceci augmenterait toutefois la quantité de calculs requise.

Il est envisageable que différents types d'analyse des risques de collision soient utilisés dans des aéronefs différents, avec une analyse relativement simple pour des versions bon marché du dispositif et des analyses plus sophistiquées dans d'autres versions. Il est encore envisageable que différents types d'analyse soient prévus dans un même dispositif, et puissent être sélectionnés par le pilote à l'aide de l'unité 25 de l'interface homme-machine 21.

C'est essentiellement au niveau de la diffusion des messages de coopération qu'une certaine uniformité doit exister entre les différents aéronefs VFR, afin que ces messages de coopération soient bien compréhensibles par chacun.

Le fait que le dispositif incorpore un récepteur GPS 13 et un émetteur/récepteur radio 20 permet de lui faire remplir avantageusement certaines autres fonctions.

Ainsi, si l'aéronef 10 est équipé d'un système 30 d'aide à la navigation, les données de positionnement $x,y,z$ issues du récepteur GPS 13, et éventuellement les données de vitesse ou de courbure $V_x,V_y,V_z,R$ produites par le module de dérivation 16 peuvent être fournies à ce système 30 pour qu'il puisse les traiter.

Les données de positionnement *x,y,z* régulièrement délivrées par le récepteur GPS 13 peuvent également être fournies à un enregistreur 31 comportant un certain nombre d'emplacements de mémoire gérés en mode premier entré/premier sorti (FIFO), de façon à mémoriser un certain nombre de positions de l'aéronef estimées jusqu'à l'instant courant à l'aide des mesures GPS. L'enregistreur 31 est associé à un capteur de choc 32 tel qu'un accéléromètre. En cas de choc, les données mémorisées dans l'enregistreur 31 sont figées. L'enregistreur 31 joue ainsi un rôle de boîte noire permettant de retracer la trajectoire de l'aéronef avant le choc.

Les données de positionnement *x,y,z* peuvent encore être fournies à une unité 33 de contrôle d'une balise de détresse. Cette unité 33 commande l'émetteur/récepteur radio 20, en réponse à un choc détecté par l'accéléromètre 32 ou en réponse à l'actionnement par le pilote d'un organe de commande manuelle 34, pour qu'un message de détresse, incorporant les dernières données *x,y,z,* soit émis, par exemple, sur la fréquence 121,5 MHz. Le fait que ce message de détresse incorpore la dernière position de l'aéronef évaluée par le récepteur GPS 13 facilite beaucoup le repérage de l'aéronef en difficulté, par rapport aux balises de détresse classiques qui sont habituellement repérées par goniométrie.

**Revendications**

1.  Dispositif d'assistance au pilotage en vol à vue, à installer à bord d'un aéronef, comprenant :

    -   des moyens de mesure (13,16) pour estimer au moins la position et le vecteur vitesse instantanés de l'aéronef ;
    -   un émetteur/récepteur radio (20) pour diffuser des messages de coopération contenant des paramètres $(x,y,z,V_x,V_y,V_z)$ représentant au moins la position et le vecteur vitesse instantanés estimés de l'aéronef (10), et pour recevoir des messages de coopération analogues diffusés depuis d'autres aéronefs (10') ;
    -   des moyens (18) d'analyse des messages de coopération reçus par l'émetteur/récepteur radio et des données issues des moyens de mesure, pour identifier des risques éventuels de collision avec d'autres aéronefs ; et
    -   une interface homme-machine (21) pour signaler au pilote de l'aéronef les risques éventuels de collision identifiés par les moyens d'analyse,

        **caractérisé en ce que** les moyens d'analyse (18) sont agencés pour procéder aux opérations suivantes à des instants d'analyse successifs :

    -   subdiviser une période d'analyse, commençant à l'instant d'analyse courant ($t_p$), en une série d'intervalles de temps consécutifs ;
    -   pour chacun de ces intervalles de temps, déterminer un volume de protection (Pr(n)) sur la base de différentes positions futures possibles ($M_{i,j}(n)$) de l'aéronef déduites des données issues des moyens de mesure (13,16) ;
    -   extrapoler la trajectoire de chaque autre aéronef, depuis lequel un message de coopération est reçu, sur la base des paramètres contenus dans ce message de coopération, de manière à estimer des positions possibles de cet autre aéronef au cours des intervalles de temps de la série ; et
    -   s'il est rempli une condition selon laquelle une position possible estimée d'un autre aéronef au cours d'un des intervalles de temps de la série se trouve dans le volume de protection déterminé pour ledit intervalle de temps, commander l'interface homme-machine (21) afin que soit délivré au pilote un message de signalisation indiquant la direction dans laquelle se trouve ledit autre aéronef à l'instant d'analyse courant.

2.  Dispositif selon la revendication 1, dans lequel le message de signalisation indique en outre le temps (n.δ) restant à écouler jusqu'au premier des intervalles de temps de la période d'analyse pour lequel ladite condition est remplie.

3.  Dispositif selon Tune quelconque des revendications précédentes, dans lequel chaque message de coopération diffusé par l'émetteur/récep (20) inclut une indication de taille réelle de l'aéronef (T), et dans lequel chaque message de signalisation se rapportant à un autre aéronef, depuis lequel un message de coopération est reçu, inclut une indication de taille apparente dudit autre aéronef (TA) déterminée sur la base de l'indication de taille réelle incluse dans le message de coopération reçu et de la distance (Dist) entre les deux aéronefs déduite de la position estimée par les moyens de mesure et de la position de l'autre aéronef incluse dans le message de coopération reçu.

4.  Dispositif selon l'une quelconque des revendications précédentes, dans lequel l'interface homme-machine (21) comprend des moyens (22) pour délivrer les messages de signalisation sous forme de messages vocaux.

5.  Dispositif selon les revendications 2, 3 et 4, dans lequel chaque message vocal de signalisation se rapportant à un autre aéronef est composé d'une indication de la nature du message, dudit temps restant à écouler (n.δ) , de la direction dans laquelle se trouve ledit autre aéronef, exprimée par un angle d'azimut (φ) et un angle de site (α), et de l'indication de taille apparente (TA).

**6.** Dispositif selon Tune quelconque des revendications précédentes, dans lequel les moyens de mesure comprennent un récepteur (13) de signaux de référence de positionnement issus d'une constellation de satellites.

**7.** Dispositif selon l'une quelconque des revendications précédentes, dans lequel l'émetteur/récepteur radio (20) est agencé pour fonctionner selon un protocole à accès multiple par répartition dans le temps sur une fréquence porteuse commune, le message de coopération étant émis dans une tranche temporelle non occupée par un message de coopération issu d'un autre aéronef.

**8.** Dispositif selon l'une quelconque des revendications précédentes, dans lequel les moyens de mesure (16) sont agencés pour estimer un rayon de virage instantané (R) de l'aéronef dans un plan horizontal, et dans lequel les positions futures possibles de l'aéronef ($M_{i,j}(n)$), sur la base desquelles les moyens d'analyse (18) déterminent les volumes de protection (Pr(n)) , dépendent du rayon de virage instantané estimé par les moyens de mesure.

**9.** Dispositif selon la revendication 8, dans lequel la durée (D) de la période d'analyse est choisie comme une fonction croissante du rayon de virage instantané (R) estimé par les moyens de mesure (16).

**10.** Dispositif selon la revendication 9, dans lequel la durée (D) de la période d'analyse est choisie comme le minimum entre une durée de référence ($D_{max}$) et une durée proportionnelle au rapport entre le rayon de virage instantané (R) estimé par les moyens de mesure et le module ($V_h$) de la projection sur le plan horizontal du vecteur vitesse instantané ($\vec{V}$) estimé par les moyens de mesure.

**11.** Dispositif selon la revendication 10, dans lequel la durée de référence ($D_{max}$) est réglable au moyen de l'interface homme-machine (21).

**12.** Dispositif selon Tune quelconque des revendications 8 à 11, dans lequel, vues en projection sur un plan horizontal, les positions futures possibles de l'aéronef ($M_{i,j}(n)$), sur la base desquelles les moyens d'analyse (18) déterminent les volumes de protection (Pr(n)), sont comprises entre la demi-droite (Δ) définie par la position et le vecteur vitesse instantanés estimés par les moyens de mesure (13,16) et le côté convexe de l'arc de cercle (A) défini par la position, le vecteur vitesse et le rayon de virage instantanés estimés par les moyens de mesure.

**13.** Dispositif selon la revendication 12, dans lequel, vues en projection sur un plan vertical, les positions futures possibles de l'aéronef ($M_{i,j}(n)$), sur la base desquelles les moyens d'analyse (18) déterminent les volumes de protection (Pr(n)), sont comprises entre la demi-droite (Δ') définie par la position et le vecteur vitesse instantanés estimés par les moyens de mesure et la demi-droite (Δ") définie par la position instantanée estimée par les moyens de mesure et par la direction horizontale.

**14.** Dispositif selon l'une quelconque des revendications précédentes, dans lequel la durée (D) de la période d'analyse est au plus égale à une durée de référence ($D_{max}$) réglable au moyen de l'interface homme-machine (21).

**15.** Dispositif selon l'une quelconque des revendications précédentes, dans lequel l'émetteur/récepteur radio (20) est agencé pour diffuser un signal de détresse, incluant la position de l'aéronef estimée par les moyens de mesure (13), en réponse à une commande manuelle du pilote et/ou à une détection automatique de collision.

**16.** Dispositif selon Tune quelconque des revendications précédentes, dans lequel certaines au moins des données issues des moyens de mesure (13) sont en outre fournies à un système d'aide à la navigation (30).

**17.** Dispositif selon l'une quelconque des revendications précédentes, comprenant en outre des moyens (31) d'enregistrement d'un certain nombre de positions de l'aéronef estimées par les moyens de mesure (13) jusqu'à l'instant courant, l'enregistrement étant figé en réponse à une détection automatique de collision.

**Patentansprüche**

**1.** Sichtflugsteuerungs-Hilfsvorrichtung zum Anbringen an Bord eines Luftfahrzeugs, umfassend:

- Meßmittel (13, 16) zum Schätzen wenigstens des Momentanortes und Momentangeschwindigkeitsvektors des Luftfahrzeugs;
- einen Funk-Sender/Empfänger (20) zum Aussenden von Kooperationsnachrichten, die Parameter (x, y, z, $V_x$, $V_y$, $V_z$) enthalten, die wenigstens den geschätzten Momentanort und Momentangeschwindigkeitsvektor des Luftfahrzeugs (10) darstellen, und zum Empfangen der von seiten anderer Luftfahrzeuge (10') ausgesendeten, analogen Kooperationsnachrichten;
- Mittel (18) zur Analyse der durch den Funk-Sender/Empfänger empfangenen Kooperationsnachrichten und der von den Meßmitteln stammenden Daten, um eventuelle Risiken einer Kollision mit anderen Luftfahrzeugen zu erkennen;
- eine Mensch-Maschinen-Schnittstelle (21), um dem Piloten des Luftfahrzeugs die durch die Analysemittel erkannten eventuellen Kollisionsrisiken zu signalisieren,

**dadurch gekennzeichnet, daß** die Analysemittel (18) so ausgebildet sind, daß folgende Operationen in aufeinanderfolgenden Analysezeitpunkten vorgenommen werden:

- Unterteilen einer zu einem laufenden Analysezeitpunkt ($t_p$) beginnenden Analyseperiode in eine Folge aufeinanderfolgender Zeitintervalle;
- Ermitteln eines Schutzraumes (Pr(n)) auf der Basis verschiedener möglicher zukünftiger Orte ($M_{i,j}(n)$) des Luftfahrzeugs, die aus den von den Meßmitteln (13, 16) stammenden Daten abgeleitet sind, für jedes dieser Zeitintervalle;
- Extrapolieren der Bahn jedes anderen Luftfahrzeugs, von dem ausgehend eine Kooperationsnachricht empfangen wurde, auf der Basis der in dieser Kooperationsnachricht enthaltenen Parameter, um mögliche Orte dieser anderen Luftfahrzeuge im Verlauf der Zeitintervalle der Folge zu schätzen; und
- wenn eine Bedingung, gemäß der sich ein geschätzter möglicher Ort eines anderen Luftfahrzeugs im Verlauf eines der Zeitintervalle der Folge in dem für das genannte Zeitintervall ermittelten Schutzraum befindet, erfüllt ist, Betätigen der Mensch-Maschinen-Schnittstelle (21), damit dem Piloten eine Signalisierungsnachricht geliefert wird, welche die Richtung angibt, in welcher sich das genannte andere Flugzeug im laufenden Analysezeitpunkt befindet.

2. Vorrichtung nach Anspruch 1, bei der die Signalisierungsnachricht außerdem die Zeit (n.δ) angibt, die zum Ablaufen bis zum ersten der Zeitintervalle der Analyseperiode, für das die genannte Bedingung erfüllt ist, verbleibt.

3. Vorrichtung nach einem der vorhergehenden Ansprüche, bei der jede durch den Sender/Empfänger (20) ausgesendete Kooperationsnachricht eine Angabe der tatsächlichen Größe des Luftfahrzeugs (T) einschließt und bei der jede Signalisierungsnachricht, die sich auf ein anderes Luftfahrzeug bezieht, von dem ausgehend eine Kooperationsnachricht empfangen worden ist, eine Angabe der Scheingröße dieses anderen Luftfahrzeugs (TA), die auf der Basis der in der empfangenen Kooperationsnachricht eingeschlossenen Angabe der tatsächlichen Größe ermittelt wird, und des Abstandes (Dist) zwischen den beiden Luftfahrzeugen einschließt, der aus dem durch die Meßmittel geschätzten Ort und aus dem in der empfangenen Kooperationsnachricht enthaltenen Ort des anderen Luftfahrzeugs abgeleitet wird.

4. Vorrichtung nach einem der vorhergehenden Ansprüche, bei der die Mensch-Maschinen-Schnittstelle (21) Mittel (22) zum Liefern der Signalisierungsnachrichten in Form von Stimmnachrichten umfaßt.

5. Vorrichtung nach einem der Ansprüche 2, 3 und 4, bei der jede sich auf ein anderes Luftfahrzeug beziehende Signalisierungsstimmnachricht aus einer Angabe der Natur der Nachricht, der Zeit, die zum Ablaufen verbleibt (n.δ), der durch einen Azimutwinkel (Φ) und einen Elevationswinkel (α) ausgedrückten Richtung, in der sich das genannte andere Luftfahrzeug befindet, und aus der Angabe der Scheingröße (TA) besteht.

6. Vorrichtung nach einem der vorhergehenden Ansprüche, bei der die Meßmittel einen Empfänger (13) von Ortungsreferenzsignalen umfassen, die von einer Satellitenkonstellation stammen.

7. Vorrichtung nach einem der vorhergehenden Ansprüche, bei der der Funk-Sender/Empfänger (20) so ausgebildet ist, daß er entsprechend einem Zeitmultiplex-Zugriffsprotokoll auf einer gemeinsamen Trägerfrequenz arbeitet, wobei die Kooperationsnachricht in einem Zeitschlitz ausgestrahlt wird, der nicht durch eine von einem anderen Luftfahrzeug stammende Kooperationsnachricht belegt ist.

8. Vorrichtung nach einem der vorhergehenden Ansprüche, bei der die Meßmittel (16) so ausgebildet sind, daß sie einen Momentankurvenradius (R) des Luftfahrzeugs in einer horizontalen Ebene schätzen, und bei der die möglichen zukünftigen Orte des Luftfahrzeugs ($M_{i,j}$(n)), auf deren Basis die Analysemittel (18) die Schutzräume (Pr (n)) ermitteln, vom durch die Meßmittel geschätzten Momentankurvenradius abhängen.

**9.** Vorrichtung nach Anspruch 8, bei der die Dauer (D) der Analyseperiode als eine steigende Funktion des durch die Meßmittel (16) geschätzten Momentankurvenradius (R) gewählt ist.

**10.** Vorrichtung nach Anspruch 9, bei der die Dauer (D) der Analyseperiode als das Minimum zwischen einer Referenzdauer ($D_{max}$) und einer Dauer gewählt ist, die proportional zum Verhältnis zwischen dem durch die Meßmittel geschätzten Momentankurvenradius (R) und dem Betrag ($V_h$) der Projektion auf die horizontale Ebene des durch die Meßmittel geschätzten Momentangeschwindigkeitsvektors ($\overline{V}$) ist.

**11.** Vorrichtung nach Anspruch 10, bei der die Referenzdauer ($D_{max}$) mittels der Mensch-Maschinen-Schnittstelle (21) einstellbar ist.

**12.** Vorrichtung nach einem der Ansprüche 8 bis 11, bei der, gesehen in der Projektion auf eine horizontale Ebene, die möglichen zukünftigen Orte des Luftfahrzeugs ($M_{i,j}$(n)), auf deren Basis die Analysemittel (18) die Schutzräume (Pr(n)) ermitteln, zwischen der Halbgeraden ($\Delta$), die durch den von den Meßmitteln (13, 16) geschätzten Momentanort und Momentangeschwindigkeitsvektor definiert ist, und der konvexen Seite des Kreisbogens (A) liegen, der durch den von den Meßmitteln geschätzten Momentanort, Momentangeschwindigkeitsvektor und Momentankurvenradius definiert ist.

**13.** Vorrichtung nach Anspruch 12, bei der, gesehen in der Projektion auf eine vertikale Ebene, die möglichen zukünftigen Orte des Luftfahrzeugs ($M_{i,j}$(n)), auf deren Basis die Analysemittel (18) die Schutzräume (Pr(n)) ermitteln, zwischen der Halbgeraden ($\Delta'$), die durch den von den Meßmitteln geschätzten Momentanort und Momentangeschwindigkeitsvektor definiert ist, und der Halbgeraden ($\Delta''$) liegen, die durch den von den Meßmitteln geschätzten Momentanort und durch die Horizontalrichtung definiert ist.

**14.** Vorrichtung nach einem der vorhergehenden Ansprüche, bei der die Dauer (D) der Analyseperiode zumindest gleich einer mittels der Mensch-Maschinen-Schnittstelle (21) einstellbaren Referenzdauer ($D_{max}$) ist.

**15.** Vorrichtung nach einem der vorhergehenden Ansprüche, bei der der Funk-Sender/Empfänger (20) so ausgebildet ist, daß er ein Notsignal, das den durch die Meßmittel (13) geschätzten Ort des Luftfahrzeugs einschließt, in Reaktion auf einen Handbetätigung des Piloten und/oder auf eine automatische Kollisionsdetektion sendet.

**16.** Vorrichtung nach einem der vorhergehenden Ansprüche, bei der wenigstens einige der von den Meßmitteln (13) stammenden Daten außerdem an ein Navigationshilfssystem (30) geliefert werden.

**17.** Vorrichtung nach einem der vorhergehenden Ansprüche, die außerdem Mittel (31) zum Aufzeichnen einer gewissen Anzahl von durch die Meßmittel (13) geschätzten Orten des Luftfahrzeugs bis zum laufenden Zeitpunkt umfaßt, wobei die Aufzeichnung in Reaktion auf eine automatische Kollisionsdetektion angehalten wird.

**Claims**

**1.** Device to assist piloting under visual flight rules, to be installed on board an aircraft and comprising:

- measuring means (13,16) for estimating at least the instantaneous position and velocity vector of the aircraft;
- a radio transceiver (20) for broadcasting co-operation messages containing parameters ($x,y,z,V_x,V_y,V_z$) representing at least the estimated instantaneous position and velocity vector of the aircraft (10) and for receiving similar co-operation messages broadcast by other aircraft (10');
- means (18) for analyzing the co-operation messages received by the radio transceiver and data output by the measuring means, to identify potential risks of collision with other aircraft; and
- a man-machine interface (21) to alert the aircraft pilot to potential risks of collision identified by the analysis means,

   **characterised in that** the analysis means (18) are arranged to perform the following operations at successive instants of analysis:

- sub-dividing an analysis period, commencing at the current instant of analysis ($t_p$), into a series of consecutive time intervals;
- for each of said time intervals, determining a protected volume (Pr(n)) on the basis of different possible future positions ($M_{i,j}(n)$) of the aircraft derived from the data output by the measuring means (13,16);
- extrapolating the trajectory of each other aircraft from which a co-operation message is received, on the basis of the parameters contained in said co-operation message, so as to estimate possible positions of said other aircraft in the time intervals of the series; and
- if a condition is satisfied whereby an estimated possible position of another aircraft in one of said time intervals in the series is located within the protected volume determined for said time intervals, controlling the man-machine interface (21) to issue the pilot with a signaling message indicating the direction in which said other aircraft is located at the current instant of analysis.

2. Device according to claim 1, wherein the signaling message further indicates the time ($n.\delta$) remaining until the first of the time intervals in the analysis period for which said condition is fulfilled.

3. Device according to any one of the preceding claims, wherein each co-operation message broadcast by the transceiver (20) includes an indication of a real size of the aircraft (T), and wherein each signaling message relating to another aircraft, from which a co-operation message is received, includes an indication of an apparent size of said other aircraft (TA) determined on the basis of the real size indication included in the received co-operation message and of the distance (Dist) between the two aircraft derived from the position estimated by the measuring means and from the position of the other aircraft included in the received co-operation message.

4. Device according to any one of the preceding claims, wherein the man-machine interface (21) comprises means (22) for issuing the signaling messages in the form of voice messages.

5. Device according to claims 2, 3 and 4, wherein each signaling voice message relating to another aircraft comprises an indication of the nature of the message, said remaining time ($n.\delta$), the direction in which said other aircraft is located, expressed by an azimuth angle ($\phi$) and an elevation angle ($\alpha$), and the indication of apparent size (TA).

6. Device according to any one of the preceding claims, wherein the measuring means comprise a receiver (13) for positioning reference signals transmitted from a constellation of satellites.

7. Device according to any one of the preceding claims, wherein the radio transceiver (20) is arranged to operate using a time-division multiple access protocol on a common carrier frequency, the co-operation message being transmitted in a time slot which is not occupied by a co-operation message from another aircraft.

8. Device according to any one of the preceding claims, wherein the measuring means (16) are arranged to estimate an instantaneous turning radius (R) of the aircraft in a horizontal plane and wherein the future possible positions ($M_{i,j}(n)$) of the aircraft, which the analysis means (18) uses as a basis for determining the protected volumes (Pr(n)), depend on the instantaneous turning radius estimated by the measuring means.

9. Device according to claim 8, wherein the duration (D) of the analysis period is chosen as an increasing function of the instantaneous turning radius (R) estimated by the measuring means (16).

10. Device according to claim 9, wherein the duration (D) of the analysis period is chosen as the minimum between a reference duration ($D_{max}$) and a duration proportional to the ratio between the instantaneous turning radius (R) estimated by the measuring means and the modulus ($V_h$) of the projection in the horizontal plane of the instantaneous velocity vector (V) estimated by the measuring means.

11. Device according to claim 10, wherein the reference duration ($D_{max}$) is adjustable via the man-machine interface (21).

12. Device according to any one of claims 8 to 11, wherein, viewed in projection on a horizontal plane, the future possible positions of the aircraft ($M_{i,j}(n)$), which the analysis means (18) uses as a basis for determining the protected volumes (Pr(n)), are contained between the straight half-curve ($\Delta$) defined by the instantaneous position and velocity vector estimated by the measuring means (13,16) and the convex side of the arc (A) defined by the position, instantaneous velocity vector and turning radius estimated by the measuring means.

13. Device according to claim 12, wherein, seen in a projection on a vertical plane, the possible future positions of the aircraft ($M_{i,j}(n)$), which the analysis means (18) uses as a basis for determining the protected volumes ($Pr(n)$), are contained between the straight half-curve ($\Delta'$) defined by the instantaneous position and velocity vector estimated by the measuring means and the straight half-curve ($\Delta''$) defined by the instantaneous position estimated by the measuring means and by the horizontal direction.

14. Device according to any one of the preceding claims, wherein the duration (D) of the analysis period is at most equal to a reference duration ($D_{max}$) which is adjustable via the man-machine interface (21).

15. Device according to any one of the preceding claims, wherein the radio transceiver (20) is arranged to broadcast a distress signal, incorporating the position of the aircraft estimated by the measuring means (13), in response to a manual command from the pilot and/or automatic detection of a collision.

16. Device according to any one of the preceding claims, wherein at least some of the data output by the measuring means (13) are further provided to a navigation aid system (30).

17. Device according to any one of the preceding claims, further comprising means (31) for recording a number of positions of the aircraft estimated by the measuring means (13) up to the current instant, the recording being locked in response to automatic detection of a collision.

FIG.1.

TRAFIC, 20 SECONDES, 3 HEURES
SITE PLUS 5, TAILLE 1

$\begin{pmatrix} x \\ y \\ z \end{pmatrix}$

$\vec{V} = \begin{pmatrix} V_x \\ V_y \\ V_z \end{pmatrix}$

10

$\vec{V'} = \begin{pmatrix} V'_x \\ V'_y \\ V'_z \end{pmatrix}$

10'

$\begin{pmatrix} x' \\ y' \\ z' \end{pmatrix}$

TRAFIC, 20 SECONDES, 11 HEURES, SITE MOINS 5, TAILLE 1

FIG.4.

La

Lb

Lc

10

Pr

EP 1 095 362 B1

FIG.2.

FIG.3.

FIG.5.

FIG.6.

FIG.7.